(19) Europäisches Patentamt
European Patent Office
Office européen des brevets

(11) **EP 2 208 016 B1**

(12) **FASCICULE DE BREVET EUROPEEN**

(45) Date de publication et mention
de la délivrance du brevet:
**04.09.2013 Bulletin 2013/36**

(51) Int Cl.:
**G01B 11/16** *(2006.01)*   **G01B 11/24** *(2006.01)*
**H01Q 3/26** *(2006.01)*

(21) Numéro de dépôt: **08846755.0**

(22) Date de dépôt: **06.11.2008**

(86) Numéro de dépôt international:
**PCT/EP2008/065086**

(87) Numéro de publication internationale:
**WO 2009/060041 (14.05.2009 Gazette 2009/20)**

(54) **CAPTEUR OPTIQUE POUR MESURER LA DEFORMATION AU COURS DU TEMPS D'UNE STRUCTURE PLANE DEFORMABLE**

OPTISCHER SENSOR ZUR MESSUNG DER VERFORMUNG ÜBER DIE ZEIT EINER VERFORMBAREN PLANAREN STRUKTUR

OPTICAL SENSOR FOR MEASURING THE DEFORMATION WITH TIME OF A DEFORMABLE PLANAR STRUCTURE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.11.2007 FR 0707858**

(43) Date de publication de la demande:
**21.07.2010 Bulletin 2010/29**

(73) Titulaires:
• **THALES**
**92200 Neuilly-sur-Seine (FR)**
• **Centre National de la Recherche Scientifique**
**75016 Paris (FR)**

(72) Inventeurs:
• **MERLET, Thomas**
**F-91410 Dourdan (FR)**
• **RENAULT, Michel**
**F-92330 Sceaux (FR)**

• **GRANGER, Pierre**
**F-92160 Antony (FR)**
• **LESUEUR, Guillaume**
**F-91400 Orsay (FR)**
• **GIRARD, Sylvain**
**F-14790 Verson (FR)**
• **GILLES, Hervé**
**F-14670 Bures sur Dives (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**EP-A- 0 351 257    FR-A- 2 151 018
FR-A- 2 818 812    US-A- 5 790 255**

**EP 2 208 016 B1**

**Description**

La présente invention concerne le domaine général de la métrologie et notamment celui des mesures relatives à la déformation de surfaces planes de grandes dimensions exposées à des conditions environnementales (atmosphériques, climatiques, ou encore vibratoires) susceptibles d'altérer leur planéité. Elle concerne plus particulièrement les mesures des déformations mécaniques affectant la surface rayonnante d'antennes radar à balayage électronique de grande dimension.

L'objet de l'invention s'inscrit dans une démarche générale consistant à chercher des solutions permettant d'alléger les structures mécaniques qui supportent les antennes actives des systèmes radars tout en garantissant aux antennes réalisées à partir de structures allégées des performances radioélectriques comparables sinon identiques à celle des antennes montées sur des structures rigides conventionnelles.

On rappelle ici qu'une antenne active est une antenne dont les performances de rayonnement sont modifiables électroniquement (pointage du faisceau, niveau des lobes latéraux, ...). Elle est schématiquement constituée par un réseau d'antennes élémentaires, ou sources, dont les positions sur la surface de l'antenne sont connues par construction et dont l'excitation est contrôlée en amplitude et en phase par un dispositif chargé de gérer le fonctionnement de l'ensemble des sources. Par suite, la surface de l'antenne étant considérée comme sensiblement plane et tout au moins très peu sujette à des variations de sa planéité au cours du temps, le diagramme de rayonnement de l'antenne est construit en appliquant à chaque source une commande de gain et de phase qui est uniquement fonction de la position de la source considérée à la surface de l'antenne.

Pour maintenir la planéité et la rigidité d'une telle antenne et ainsi en garantir les performances radioélectriques, on a généralement recours à des structures mécaniques rigides et massives, coûteuses car usinées avec précision, sur lesquelles sont montées les sources qui constituent la surface rayonnante.

L'utilisation de telles structures, si elle permet d'assurer la réalisation d'antennes actives dont la surface rayonnante présente une planéité sensiblement constante au cours du temps, présente en outre l'inconvénient de conduire immanquablement à la réalisation d'antennes d'un poids important. Ce poids important a notamment pour conséquence de limiter la transportabilité des équipements radars équipés de telles antennes ou du moins d'en complexifier la logistique de transport, en terme de taille et de consommation des véhicules porteurs notamment. C'est pourquoi, face à ces problèmes de poids et de coût de fabrication, un axe d'amélioration des procédés de fabrication des antennes actives consiste dans la recherche de solutions techniques permettant d'utiliser des structures porteuses plus légères et de fabrication plus simple, notamment en terme de tolérances de fabrication, sans pour autant nuire aux performances globales des antennes actives montées sur de telles structures. Cependant un allègement de la structure mécanique expose l'antenne à des déformations incontrôlées et variables au cours du temps. Celles-ci peuvent être induites par des conditions particulières d'environnement comme un fort vent, un accroissement anormal du poids de l'ensemble, lié par exemple à la présence d'une couche de glace sur le radôme, ou encore des variations importantes de température. Ces déformations mécaniques dégradent les caractéristiques du faisceau hyperfréquence émis (i.e. du diagramme de rayonnement), ce qui altère la précision de mesure du radar.

Une solution pour réaliser, sur une structure mécanique allégée et moins coûteuse, une antenne active présentant des performances radioélectriques satisfaisantes consiste à utiliser une structure mécanique déformable et à compenser l'effet des variations de planéité présentées par la surface rayonnante sur le diagramme de rayonnement de l'antenne par une correction de la commande d'amplitude et de phase appliquée à chacune des sources. Pour réaliser cette correction, deux approches peuvent être envisagées.

La première approche consiste à mettre en oeuvre un algorithme d'auto-calibration ou d'auto-focalisation à partir des signaux mesurés par l'antenne. radar. Cette technique, très innovante, nécessite cependant la présence de cibles coopératives, ou de cibles d'opportunités dont la position dans la zone de mesure est connue.

La seconde approche consiste, quant à elle, à mesurer physiquement la déformation mécanique de l'antenne en l'équipant d'un nombre limité de capteurs disposés de façon sélective sur le plan rayonnant. Dans cette approche, les capteurs utilisés doivent être insensibles au rayonnement électromagnétique très perturbant émis par l'antenne. C'est pourquoi on utilise usuellement des capteurs optiques passifs dans lesquels la sonde de mesure, toute optique, est séparée des composants optoélectroniques d'émission et de réception et de l'électronique de traitement du signal par l'utilisation d'un déport par fibre optique. En outre, les capteurs utilisés devant n'affecter en rien le diagramme de rayonnement émis par l'antenne on utilise préférentiellement des sondes de mesure constituées d'éléments exclusivement diélectriques.

Une mise en oeuvre de cette seconde approche est notamment décrite dans la demande de brevet français déposé par la demanderesse et publié le 28/06/2002 sous la référence FR2818812. Outre le concept général d'association d'une structure déformable et d'un dispositif électronique de compensation des déformations, ce document présente un exemple de capteur optique permettant de réaliser pratiquement cette compensation. Ce capteur est constitué d'un laser continu illuminant un hologramme volumique permettant de générer un ensemble de N faisceaux lumineux discrets contenus dans un plan de référence. Les écarts de la surface rayonnante par rapport à ce plan de référence sont captés en N points de mesure par N réseaux linéaires de fibres optiques. La lumière collectée par les N nappes de fibres est déportée vers des récepteurs CCD. Les signaux détectés sont regroupés et exploités par un algorithme de calcul instantané de la déformée de la surface mécanique.

Ce mode de réalisation de la mesure des déformations subies par la surface rayonnante, quoique répondant aux besoins, est toutefois difficile à mettre en oeuvre, du fait notamment du caractère délicat de la réalisation de l'hologramme permettant de définir le plan optique de référence et du positionnement des capteurs.

La demande de brevet français publiée le 13/04/1973 sous la référence FR2.151.018 nous enseigne un moyen alternatif pour réaliser un plan lumineux s'étalant sur 360°, à partir d'une source lumineuse collimatée, ce moyen comportant notamment un miroir conique dont l'angle au sommet est de 90° et dont le sommet est éclairé par la source collimatée selon une direction perpendiculaire au plan formé.

Un but de l'invention est de proposer un moyen alternatif aux moyens connus, permettant de mesurer les variations de planéité présentées au cours du temps par une surface plane déformable. Un autre but de l'invention est de proposer un moyen applicable, en particulier, au cas où la surface plane considérée est la surface rayonnante d'une antenne active.

A cet effet l'invention a pour objet un dispositif optique pour mesurer en temps réel les déformations subies par une surface plane montée sur une structure déformable, dispositif qui comporte des moyens pour former un plan optique de référence et des capteurs optiques de position répartis sur la surface de l'antenne. Chaque capteur est agencé de façon à mesurer la variation de position, par rapport au plan optique formé, du point de la surface sur lequel il est positionné. Les capteurs de position sont des capteurs optiques linéiques, transparents aux ondes radioélectriques, configurés pour intercepter le faisceau optique matérialisant le plan de référence et pour produire un signal optique fonction de la zone du capteur ayant intercepté le faisceau optique, ledit signal étant transmis à des moyens de traitement déportés par l'intermédiaire d'au moins une fibre optique.

Selon l'invention les moyens pour former un plan optique de référence comportent une source optique laser munie d'une lentille de collimation éclairant un miroir conique disposé sur la surface à mesurer en un point de référence la source et le miroir conique étant agencés de façon à créer un plan optique de référence dont l'orientation par rapport au plan de l'antenne est connue. Chaque capteur de position est constitué par au moins une sonde optique passive, disposée dans un plan perpendiculaire au plan optique de référence de façon à intercepter le faisceau optique et à fournir un signal lumineux dont l'intensité varie de manière continue en fonction de la position de la zone d'interception sur le capteur.

Selon l'invention, le nombre et l'agencement des capteurs sur la surface est fonction des différents modes de déformations dont on veut mesurer les effets sur la planéité de la surface.

Selon un mode de réalisation particulier, chaque capteur de position est constitué par deux sondes optiques passives, disposées dans un plan perpendiculaire au plan optique de référence de façon à intercepter le faisceau optique et à fournir un signal lumineux dont l'intensité varie en continu avec la position de la zone d'interception sur le capteur, les deux sondes étant agencées l'une par rapport à l'autre de façon à ce que pour une variation de la position d'interception donnée les intensités des signaux lumineux transmis par chacune des sondes varient de façon opposée.

Selon une variante de réalisation le dispositif selon l'invention comporte en outre des moyens pour former un plan optique de référence émettant une onde lumineuse modulée en intensité et des moyens de traitement du signal pour effectuer une démodulation synchrone de l'onde lumineuse interceptée par chaque capteur.

L'invention a également pour objet un procédé pour compenser les effets des variations de planéité d'une antenne active sur la forme et la direction de son diagramme de rayonnement, qui met en oeuvre le dispositif selon l'invention le résultat de la mesure de position réalisée par chaque capteur étant utilisé pour déterminer la déformation du diagramme d'émission et la correction d'amplitude et de phase à appliquer à chacune des sources pour compenser la déformation mesurée.

Les caractéristiques et avantages de l'invention seront mieux appréciés grâce à la description qui suit, description qui expose les caractéristiques de l'invention au travers d'un exemple non limitatif d'application à la mesures des déformations de la surface rayonnante d'une antenne active. La description s'appuie sur les figures annexées qui représentent:

- la figure 1, un schéma illustrant la structure du dispositif selon l'invention et l'agencement de ses différents éléments;
- la figure 2, un schéma illustrant le principe de la mesure de déformation réalisée;
- les figures 3 et 4, des illustrations relatives à un premier mode de réalisation du dispositif selon l'invention;
- les figures 5 et 6, des courbes de mesures, illustrant la mise en oeuvre sur un cas pratique du dispositif selon l'invention dans le mode de réalisation des figures 3 et 4;
- les figures 7 et 8, des illustrations relatives à un second mode de réalisation du dispositif selon l'invention;
- les figures 9 et 10, des courbes de mesures, illustrant la mise en oeuvre sur un cas pratique du dispositif selon l'invention dans le mode de réalisation des figures 7 et 8.

La description qui suit décrit plus particulièrement les caractéristiques physiques, de fonctionnement et d'agencement des moyens du dispositif selon l'invention permettant de mesurer la déformation mécanique au cours du temps d'une surface plane déformable, et en particulier d'une antenne radar active. Le cas particulier d'une antenne radar active est pris ici comme support à la description de l'invention, car bien qu'étant parfaitement applicable à la mesure des déformations d'une surface plane quelconque, l'emploi du dispositif selon l'invention trouve dans ce cas particulier une justification naturelle, dans la mesure où il n'est pas susceptible de perturber le rayonnement électromagnétique dont l'antenne est le siège ou d'être perturbé par lui. Cette mesure est par ailleurs nécessaire, dans ce cas d'application, pour effectuer à la correction électronique, au moyen de circuits amplificateurs et/ou déphaseurs appropriés, des imperfections du diagramme de rayonnement de l'antenne provoquées par sa déformation mécanique.

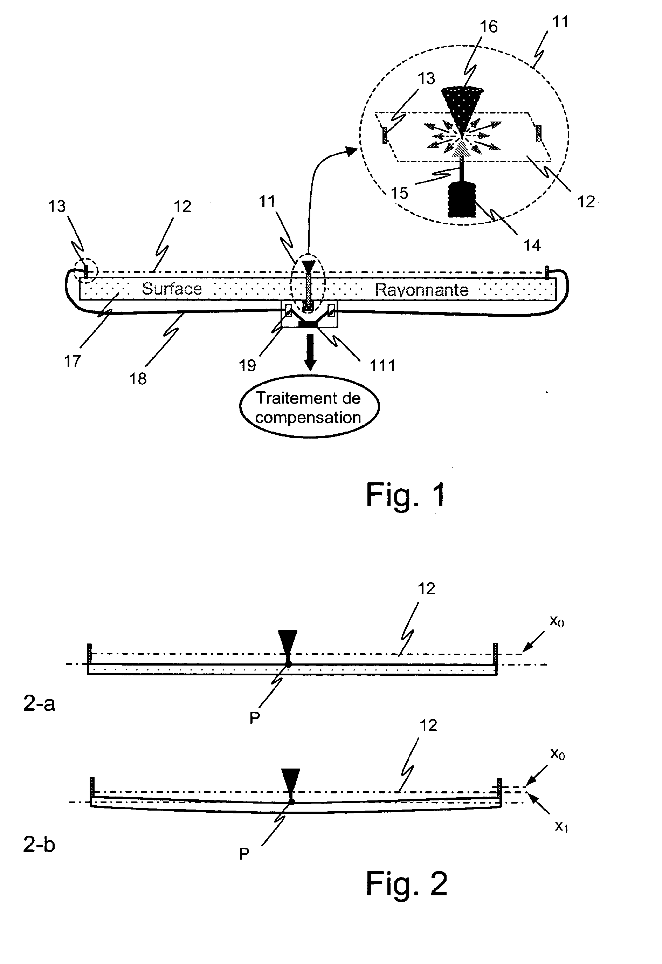

On s'intéresse tout d'abord aux figures 1 et 2.

L'invention propose une solution permettant de simplifier la mise en oeuvre du procédé optique objet de la demande de brevet FR2818812, citée précédemment, destiné à mesurer et à compenser des déformations de la surface rayonnante d'une antenne active réalisée sur une structure de soutien déformable. Par "déformable" on entend ici que les déformations subies par la structure mécanique porteuse entraînent une déformation du plan de l'antenne telle qu'elle ne permet pas de réaliser un diagramme de rayonnement acceptable, eut égard au diagramme de rayonnement souhaité, sans procéder à une correction. L'objet du brevet porte plus particulièrement sur les moyens mis en oeuvre pour mesurer les déformations.

Comme l'illustre la figure 1, le dispositif selon l'invention comporte principalement des moyens 11 destinés à créer un plan optique de référence, matérialisé par la ligne discontinue 12 sur la figure, et des capteurs optiques passifs 13 destinés à mesurer les effets de la déformation subie par la surface rayonnante 17 de l'antenne aux points où ils sont placés.

Les moyens 11 pour générer un plan optique de référence comportent principalement:

- une source lumineuse 14, émettant de préférence un faisceau 15 étroit, une source laser préférentiellement;
- un miroir conique 16 dont la pointe est éclairée par le faisceau laser.

Le miroir conique a pour effet avantageux de provoquer l'étalement du faisceau laser incident selon un plan 12 perpendiculaire à la direction du faisceau. Par rapport aux moyens décrit dans l'art antérieur, en particulier dans la demande de brevet FR2818812, le miroir conique présente également l'avantage d'être un moyen simple à réaliser, adapté à tout type d'antenne radar plane (indépendamment de sa gamme de fréquence et de sa géométrie) et qui permet de générer de manière continue un plan optique de référence, ce qui facilite avantageusement le positionnement des capteurs, positionnement déjà lié à la structure de l'antenne sur laquelle ils sont disposés.

Selon l'invention, la source lumineuse et le miroir conique sont agencés de manière rigide l'un par rapport à l'autre. Ils sont également positionnés de manière fixe sur la surface rayonnante, en un point P déterminé principalement selon deux critères. Tout d'abord le point P occupe une position suffisamment centrale pour permettre de générer un plan optique détectable par l'ensemble des capteurs 13 disposés sur la surface rayonnante. En outre, le plan optique étant destiné à servir de plan de référence, le point P est situé à un emplacement correspondant à un noeud de déformation de la structure porteuse, c'est à dire correspondant à une zone de la structure pour laquelle les déformations subies sont les plus faibles.

Selon l'invention, en revanche, les capteurs 13 sont distribués en des points de la surface rayonnante susceptibles de subir les effets des déformations de la structure porteuse, en particulier aux points de mesure spécifiques nécessaires pour reconstituer la déformée de la surface rayonnante. La fonction remplie par ces capteurs de déformation 13, consiste simplement, comme l'illustre la figure 2, à mesurer les variations de position, d'écartement, par rapport au plan de référence qui affectent au cours du temps le point sur lequel est placé le capteur considéré. Ainsi, la mesure de l'écart de position $x_1$-$x_0$ par rapport au plan optique de référence défini en P, point supposé correspondre à un noeud de déformation, permet de déterminer l'amplitude de la déformation, selon l'axe normal au plan de référence, à l'endroit du capteur. Par suite, la mesure des écarts observés en chacun des points de mesure permet de reconstituer la déformée de la surface rayonnante à l'instant de mesure considéré.

S'agissant de capteurs optiques passifs, la mesure réalisée par chaque capteur est matérialisée par une (ou plusieurs) onde(s) lumineuse(s) dont l'intensité est fonction de la position du capteur 13 relativement au plan optique de référence 12. Pour chaque capteur 13, cette (ces) onde(s) lumineuse(s) est (sont) transmises par liaison optique 18 à un dispositif 19, un récepteur (un photodétecteur), chargé de transformer les ondes lumineuses en signaux électriques. Après une opération éventuelle de conditionnement 37, les signaux électriques sont transmis à un processeur temps réel 111 qui en extrait les informations de déformation correspondantes de façon à déterminer pour chacun des éléments actifs qui compose la surface rayonnante la valeur de la correction d'amplitude et de phase à appliquer au signal émis ou reçu par l'intermédiaire de cet élément pour prendre en compte la déformation globalement subie par la surface rayonnante.

Du point de vue de la réalisation pratique du dispositif selon l'invention, les récepteurs 19 et le processeur 111, sont placés, comme l'illustre la figure 1, en un endroit de la structure de l'antenne tel qu'ils ne sont pas perturbés par le rayonnement émis par l'antenne et qu'ils ne perturbent pas, de leur côté, le signal radioélectrique reçu.

De manière connue, les capteurs de déformations 13 utilisés peuvent être décrits en termes fonctionnels comme des dispositifs capteurs de position linéiques c'est à dire capable de fournir une information de détection unidimensionnelle. Ils présentent une zone étendue sensible à la lumière. Ils sont agencés à la surface de l'antenne de façon à intercepter le faisceau lumineux, c'est à dire la fraction du plan optique de référence, émis dans leur direction. Ils restituent en sortie une onde lumineuse dont les caractéristiques sont fonction de la position du point ayant intercepté le faisceau lumineux. Ainsi, en fonction de la déformation subie par la surface de l'antenne au point où se situe le capteur considéré, la zone sensible intercepte le faisceau lumineux correspondant au plan optique de référence en l'un ou l'autre des points qui la constituent. Par suite, moyennant un étalonnage, il est possible de connaître, simplement en analysant l'onde lumineuse restituée par le capteur, la valeur de la déformation subie suivant la direction de mesure, la direction perpendiculaire au plan de l'antenne, dans le cas présent.

Il existe dans le commerce différents types de capteurs optiques passifs fonctionnant de manière continue comme certains capteurs linéaires, ou discrète comme les réseaux de fibres optiques. Le dispositif selon l'invention peut avantageusement être mis en oeuvre en utilisant l'un ou l'autre type. La suite de la description présente sur deux modes de réalisation préférés, mais non exclusifs, la façon dont le dispositif selon l'invention peut avantageusement être mis en oeuvre en utilisant soit des capteurs constitués d'éléments discrets, soit des capteurs linéaires.

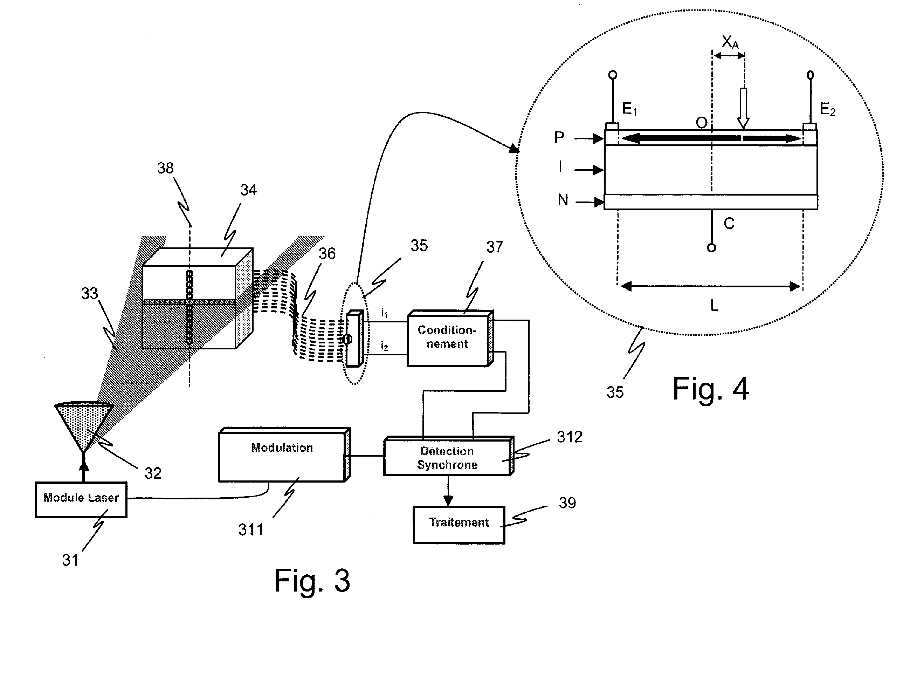

On s'intéresse ensuite aux figures 3 à 6 qui illustrent un premier mode préféré de réalisation du dispositif selon l'invention.

Dans ce premier mode de réalisation, présenté à titre d'exemple non limitatif, le dispositif selon l'invention comporte les éléments caractéristiques formant sa structure de base, à savoir:

- des moyens pour générer un plan optique de référence 33 présentant une orientation donnée par rapport à la surface rayonnante de l'antenne, ces éléments étant constitués d'une source lumineuse 31 émettant un faisceau laser sur la pointe d'un miroir conique 32,
- des capteurs de position 34 agencés de façon à intercepter le faisceau matérialisant le plan optique de référence et fournissant une onde lumineuse fonction du point de la zone sensible du capteur qui intercepte l'onde lumineuse correspondant au plan de référence 33;
- des circuits optoélectroniques de réception 35 pour convertir les signaux lumineux fournis par les capteurs de position 34 en signaux électriques destinés au processeur 39 chargé de traiter les écarts de position pouvant apparaître au cours du temps, écarts de position qui traduisent une altération de la planéité du plan rayonnant de l'antenne.
- des moyens de liaison 36 pour acheminer les signaux optiques provenant de chaque capteur 34 vers le circuit de réception 35 qui lui est associé.

Dans ce premier mode de réalisation, les capteurs de position, sont constitués par des éléments en matériau électriquement passifs renfermant les extrémités d'une nappe de fibres optiques 36, juxtaposées et agencées de façon à que leurs extrémités forment un groupe de capteurs élémentaires disposés, comme l'illustre la figure 3, le long d'une ligne 38 perpendiculaire au plan optique de référence 33. Les capteurs de position 34 ainsi formés sont par exemple directement agencés sur la surface de l'antenne de façon à ce qu'en l'absence de déformation du plan rayonnant, l'interception du faisceau lumineux 33 par un capteur donné soit effectuée, comme l'illustre la figure 3, par la fibre ou les fibres optiques situées au centre de la nappe de fibres.

Ainsi en l'absence de déformation la fibre optique centrale capte l'onde lumineuse provenant du faisceau matérialisant le plan de référence 33, et transmet cette onde vers son autre extrémité; tandis que les autres fibres optiques de la nappe ne captent aucune onde lumineuse. Inversement, en cas de déformation, la position du capteur relativement au plan de référence ayant changé, la fibre optique centrale ne capte plus d'onde lumineuse, et l'onde issue du faisceau matérialisant le plan de référence est captée par la fibre optique qui, du fait du déplacement, se trouve en position d'intercepter cette onde lumineuse. De cette façon, les capteurs 34 ainsi constitués par une nappe de fibre formant autant de capteurs élémentaires permettent, connaissant les positions de chaque fibre dans la nappe, d'effectuer une mesure discrète de la position relative du capteur par rapport au faisceau de référence.

La portion de faisceau de fibre optique 36 laissée libre, qui émerge du capteur, est utilisée ici pour transmettre les ondes lumineuses captées par chacune des fibres formant la nappe vers le dispositif de réception 35 capable de transformer ces ondes lumineuses en signal électrique. Dans ce mode de réalisation on utilise un dispositif photodétecteur de type PSD ou "Position Sensitive Detector" selon la dénomination anglo-saxonne reconnue à l'entrée duquel on connecte la nappe 36 de fibres optiques. Un tel dispositif, dont la structure est illustrée par la figure 4, est capable de déterminer directement la position $X_A$ du barycentre de la distribution lumineuse qui l'éclaire, par rapport à une origine O donnée. On utilise ici un PSD à une dimension généralement constitué par une photodiode à structure PIN allongée, de longueur L, délivrant deux courants photoélectriques $I_1$ et $I_2$ collectés respectivement sur deux électrodes $E_1$ et $E_2$

situées aux deux extrémités de la zone photosensible. La position du barycentre est directement déduite de la mesure des courants $I_1$ et $I_2$ selon l'expression:

$$X_A = \frac{L}{2} \cdot \frac{I_2 - I_1}{I_2 + I_1} \qquad [1]$$

Ainsi l'extrémité libre de la nappe de fibre optique 36 étant connectée à l'entrée du PSD 35, celui-ci délivre sur ses deux sorties $E_1$ et $E_2$ des courants $I_1$ et $I_2$ directement fonctions de la position dans la nappe de la fibre optique ayant capté l'onde lumineuse correspondant au faisceau matérialisant le plan optique de référence 33. Autrement dit le PSD ainsi agencé, délivre sur ses deux sorties $E_1$ et $E_2$ des courants $I_1$ et $I_2$ directement fonctions de la position du capteur 34 relativement au plan de référence 33, position qui rend compte de l'état de planéité de la surface rayonnante.

Dans une version simple du dispositif la source lumineuse 31 produit une onde laser continue, de sorte que le photodétecteur PSD 35 délivre sur ses sorties $E_1$ et $E_2$ des courants $I_1$ et $I_2$ continus. Cependant, l'utilisation d'un miroir conique pour générer le plan optique de référence, entraîne un étalement spatial continu de la lumière émise par la source laser sur l'ensemble du plan rayonnant. Il en résulte une diminution de la quantité de lumière, émanant du faisceau matérialisant le plan de référence, collectée par chaque capteur. Cette baisse d'intensité lumineuse a pour conséquence de nécessiter l'utilisation de photodétecteurs très sensibles, lesquels détecteurs sont également très sensibles à une éventuelle pollution lumineuse qui peut venir perturber la détection réalisée. Cette pollution peut cependant être grandement évitée en protégeant les capteurs 34 d'une exposition à une source lumineuse extérieure, en plaçant par exemple l'antenne sous un radôme opaque.

Une autre solution pour protéger le dispositif d'une éventuelle pollution lumineuse consiste à utiliser une source lumineuse 31 qui soit modulable et à adjoindre au dispositif selon l'invention, comme l'illustre la figure 3, des moyens 311 pour générer un signal de modulation, permettant de moduler l'intensité de l'onde lumineuse produite par la source 31, et des moyens de traitement 312 permettant de réaliser une détection synchrone des courants électriques modulés $I_1$ et $I_2$, alors délivrés par le photodétecteur PSD. Compte tenu des caractéristiques optoélectroniques du PSD, il est en effet avantageusement possible d'associer au dispositif selon l'invention des moyens de modulation de la source lumineuse 31 avec une démodulation synchrone du signal électrique fourni par le PSD. Une telle détection assure de manière connue un gain en sensibilité de détection très important et permet au dispositif selon l'invention de s'affranchir de manière autonome des perturbations dues à la lumière ambiante ou à des perturbations lumineuses extérieures.

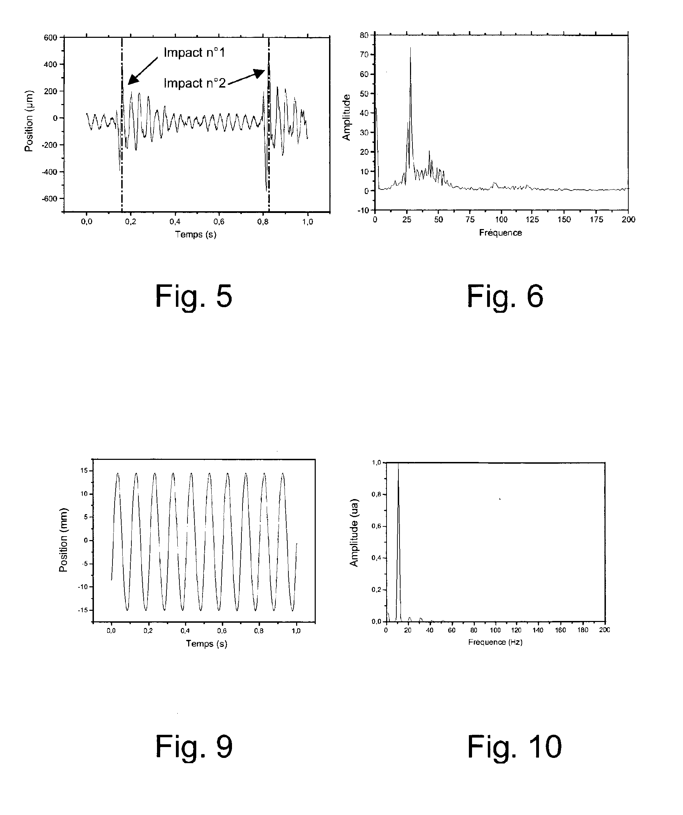

Ce premier mode de réalisation préféré du dispositif selon l'invention est donc plus particulièrement caractérisé par le fait qu'on utilise ici un dispositif photodétecteur de type PSD associé à un dispositif de mesure permettant de réaliser une mesure discrète ("pixélisée") de la variation de la position du capteur 34 relativement au plan de référence 33. L'utilisation d'un tel détecteur plutôt qu'un détecteur imageur de type dispositif à transfert de charge ou CCD ("Charge Coupled Device" selon la dénomination anglosaxonne) permet avantageusement d'améliorer le dispositif selon l'invention en exploitant une émission laser modulée. Il est en outre avantageusement possible avec de tels détecteurs d'effectuer des mesures dynamiques de déformation. Les figures 5 et 6 illustrent la faisabilité de telles mesures au moyen du dispositif selon l'invention dans ce mode de réalisation préféré, au travers de courbes relatives aux variations de position affectant un capteur placé en un point d'une surface plane soumise à une série d'impacts.

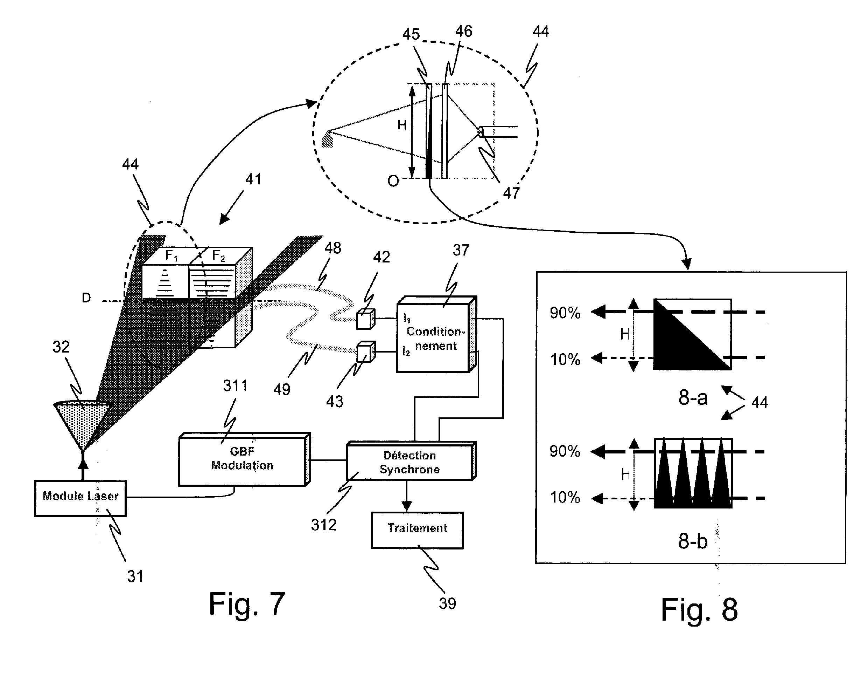

On s'intéresse ensuite aux figures 7 à 10 qui illustrent un second mode préféré de réalisation du dispositif selon l'invention.

Dans ce second mode de réalisation, présenté également à titre d'exemple non limitatif, le dispositif selon l'invention comporte, comme le mode de réalisation précédent, les éléments caractéristiques formant sa structure de base, à savoir:

- une source laser 31;
- un miroir conique 32;
- des capteurs de position 41,
- un détecteur constitué de deux éléments photoélectriques 42 et 43,
- un processeur temps réel 39.

En outre, il peut également comporter, comme dans le mode de réalisation précédent, des moyens 311 pour générer un signal pour effectuer la modulation de la source laser 31 et des moyens 312 pour effectuer la démodulation synchrone du signal fourni par les photodétecteurs 42, 43.

Ce second mode de réalisation se différencie du précédent en ce que la mesure de position est ici effectuée de manière non pas discrète mais continue. A cet effet, les fonctions de capteur de position et de photodétecteur sont ici réalisées par des dispositifs différents de ceux utilisés précédemment. Cependant le principe de mesure est analogue.

Dans ce second mode de réalisation, le plan optique de référence éclaire des capteurs de position 41 constitués chacun par deux sous-ensembles 44 solidaires, de hauteur utile H, chaque sous-ensemble comportant une ouverture, ou fenêtre, $F_1$ ou $F_2$ munie d'un filtre optique 45 et d'un élément optique 46, de type lentille de Fresnel par exemple, qui focalise l'onde lumineuse traversant le capteur sur l'extrémité 47 d'une fibre optique. Le filtre optique 45 a pour fonction de transmettre l'onde lumineuse incidente avec une atténuation variant linéairement, de manière continue, le long de la hauteur H. Les deux sous-ensembles 44 sont en outre agencés l'un par rapport à l'autre de façon à ce que, comme l'illustre la figure 7, les variations d'atténuation le long de H soient inverses l'une de l'autre.

Par suite le principe de mesure de position mis en oeuvre dans ce second mode de réalisation consiste à déterminer la position du point d'interception du plan de référence, en mesurant la différence des intensités des ondes lumineuses transmises par les deux sous-ensembles. Ainsi, si on appelle respectivement $T_1$ et $T_2$ les facteurs de transmission de l'onde lumineuse incidente de chacun des sous-ensembles on peut écrire:

$$T_1 = \frac{T_0}{2}\left(1 - \frac{2.X_A}{H}\right) \qquad [2]$$

et

$$T_2 = \frac{T_0}{2}\left(1 + \frac{2.X_A}{H}\right) \qquad [3]$$

où $X_A$ représente la mesure de position du point d'interception considéré par rapport à un point D situé au centre de la fenêtre.

Les intensités lumineuses transmises aux extrémités des fibres optiques 48 et 49 sont alors directement proportionnelles à $T_1$ et $T_2$.

Les capteurs de position 41 ainsi formés sont par exemple directement agencés sur la surface de l'antenne de façon à ce qu'en l'absence de déformation du plan rayonnant, l'interception du faisceau lumineux 33 par un capteur donné soit effectuée, comme l'illustre la figure 7, en un point situé sur la droite D médiane des deux fenêtres $F_1$ et $F_2$.

Les ondes lumineuses correspondantes sont ensuite transmises à un dispositif photodétecteur constitué, dans ce second mode de réalisation, de deux photodiodes identiques 42 et 43. Les deux courants photoélectriques $I_1$ et $I_2$ obtenus en sortie des photodiodes sont directement proportionnels à $T_1$ et $T_2$ de sorte que, $X_A$ représentant l'écart de position de la droite D (c'est à dire du capteur) par rapport au plan de référence, l'on peut écrire:

$$X_A = \frac{H}{2}.\frac{I_2 - I_1}{I_2 + I_1} \qquad [4]$$

Ainsi chacun des éléments 44 d'un capteur 41 étant relié au moyen de fibres optiques 48 et 49 à des photodiodes 42 et 43 celles-ci délivrent sur leurs sorties des courants $I_1$ et $I_2$ directement fonctions de la position $X_A$ du point par lequel l'onde lumineuse correspondant au faisceau matérialisant le plan optique de référence 33 est entrée dans le capteur. Autrement dit, de manière analogue au mode de réalisation précédent, les courants $I_1$ et $I_2$ produits par les photodiodes permettent de déterminer directement la position du capteur 41 relativement au plan de référence 33, position qui rend compte de l'état de planéité de la surface rayonnante.

Ce second mode de réalisation préféré du dispositif selon l'invention est donc plus particulièrement caractérisé par le fait qu'on utilise ici un capteur de position 41 continu et un dispositif photodétecteur simplement constitué de deux photodiodes 42 et 43, chaque photodiode étant connectée à un des deux éléments 44 constituant le capteur. L'agencement particulier de ces deux éléments permet en outre de réaliser la mesure de position de manière différentielle à partir des signaux électriques $I_1$ et $I_2$ fournis par les photodiodes, mesure différentielle qui permet en particulier de s'affranchir des variations au cours du temps de l'intensité de l'onde lumineuse produite par la source 31.

Dans ce mode particulier de réalisation les filtres 45 constituant chacun des éléments 44 d'un capteur de position 41 (filtres en intensité) jouent le rôle de véritables "PSD optiques" qui permettent de transformer une variation de position du capteur relativement au plan laser de référence en une variation d'intensité lumineuse; l'intensité lumineuse transmise étant, comme l'illustre la figure 8, fonction de la zone d'interception du faisceau lumineux matérialisant le plan de référence.

En pratique, pour constituer les filtres optiques 45, deux techniques sont utilisables :

- réalisation de filtres neutres, métalliques, à densité optique inhomogène suivant la direction H mais homogènes suivant l'axe perpendiculaire à H;
- réalisation de masques opaques structurés, destinés à occulter une partie de la fenêtre sur laquelle ils sont fixés. Les représentations schématiques 8-a et 8-b de la figure 8 illustrent deux exemples de réalisation possible de ces masques.

Les figures 9 et 10 illustrent la faisabilité de telles mesures au moyen de ce mode de réalisation du dispositif selon l'invention, au travers de courbes relatives aux variations de position affectant un capteur placé en un point d'une surface plane soumise à une déformation sinusoïdale à une fréquence de 10 Hz.

## Revendications

1. Dispositif optique pour mesurer en temps réel les déformations subies par une surface plane (17) montée sur une structure déformable, le dispositif comportant des moyens (11) pour former un plan optique de référence (12) et des capteurs optiques (13, 41) de position répartis sur la surface (17), chaque capteur étant agencé de façon à mesurer la variation de position, par rapport au plan optique (12) formé, du point de la surface sur lequel il est positionné, les capteurs optiques de position (41) étant des capteurs optiques linéiques, transparents aux ondes radioélectriques, configurés pour intercepter le faisceau optique matérialisant le plan de référence et pour produire un signal optique fonction de la zone du capteur ayant intercepté le faisceau optique, ledit signal étant transmis à des moyens de traitement (39) déportés par l'intermédiaire d'au moins une fibre optique(48, 49);
**caractérisé en ce que**:

   - les moyens pour former un plan optique de référence comportent une source optique laser (31) munie d'une lentille de collimation éclairant un miroir conique (32) disposé sur la surface à mesurer en un point de référence la source et le miroir conique étant agencés de façon à créer un plan optique de référence (12) dont l'orientation par rapport au plan de l'antenne est connue;
   - chaque capteur de position (41) est constitué par au moins une sonde optique passive, disposée dans un plan perpendiculaire au plan optique de référence de façon à intercepter le faisceau optique et à fournir un signal lumineux dont l'intensité varie de manière continue en fonction de la position de la zone d'interception sur le capteur.

2. Dispositif selon la revendication 1, **caractérisé en ce que** le nombre et l'agencement des capteurs (13, 41) sur la surface (17) est fonction des différents modes de déformations dont on veut mesurer les effets sur la planéité de la surface.

3. Dispositif selon l'une quelconque des revendications 1 ou 2, **caractérisé en ce que** chaque capteur de position (41) est constitué par deux sondes optiques passives (44), disposées dans un plan perpendiculaire au plan optique de référence de façon à intercepter le faisceau optique et à fournir un signal lumineux dont l'intensité est fonction de la position de la zone d'interception sur le capteur, les deux sondes (44) étant agencées l'une par rapport à l'autre de façon à ce que, pour une variation de la position d'interception donnée, les intensités des signaux lumineux fournis par chacune des sondes varient de façon opposée.

4. Dispositif selon l'une quelconque des revendications 1 à 3, **caractérisé en ce que**:

   - les moyens (311, 31, 32) pour former un plan optique de référence comportent une source laser (31) émettant une onde lumineuse modulée en intensité,
   - les moyens de traitement du signal (312) sont aptes à effectuer une démodulation synchrone de l'onde lumineuse interceptée par chaque capteur.

5. Dispositif selon l'une quelconque des revendications 3 ou 4, **caractérisé en ce qu'**il comporte en outre des dispositifs détecteurs, les signaux optiques produits par chacun des capteurs (41) étant transmis par fibre optique (48, 49) à un détecteur donné.

**6.** Dispositif selon la revendication 5, **caractérisé en ce que** chaque capteur (41) produisant deux signaux lumineux est constitué de deux photodiodes (42, 43), chaque photodiode étant reliée à une fibre optique (48, 49) transportant un des signaux produit par le capteur.

**7.** Procédé pour compenser les effets des variations de planéité d'une antenne active sur la forme et la direction de son diagramme de rayonnement, **caractérisé en ce que** l'on met en oeuvre le dispositif selon l'une quelconque des revendications précédentes et que le résultat de la mesure de position, réalisée par chaque capteur, est utilisé pour déterminer la déformation du diagramme d'émission et la correction d'amplitude et de phase à appliquer à chacune des sources pour compenser la déformation.

**Patentansprüche**

**1.** Optisches Gerät zur Echtzeitmessung von von einer auf einer verformbaren Struktur montierten ebenen Oberfläche (17) erfahrenen Verformungen, wobei das Gerät Mittel (11) zum Bilden einer optischen Referenzebene (12) und über die Oberfläche (17) verteilte optische Positionssensoren (13, 41) umfasst, wobei jeder Sensor so ausgelegt ist, dass er die Positionsvariation in Bezug auf die gebildete optische Ebene (12) des Punktes der Oberfläche misst, auf der er sich befindet, wobei die optischen Positionssensoren (41) für Funkwellen transparente lineare Positionssensoren sind, konfiguriert zum Abfangen des die Referenzebene materialisierenden optischen Strahls und zum Erzeugen eines optischen Signals in Abhängigkeit von der Zone des Sensors, der den optischen Strahl abgefangen hat, wobei das Signal mittels wenigstens einer Lichtleitfaser (48, 49) zu ortsfernen Verarbeitungsmitteln (39) gesendet wird;
**dadurch gekennzeichnet, dass**:

- das Mittel zum Bilden einer optischen Referenzebene eine optische Laserquelle (31) umfasst, die mit einer Kollimationslinse versehen ist, die einen auf der zu messenden Oberfläche an einem Referenzpunkt angeordneten konischen Spiegel (32) beleuchtet, wobei die Quelle und der konische Spiegel so ausgelegt sind, dass sie eine optische Referenzebene (12) erzeugen, deren Orientierung in Bezug auf die Ebene der Antenne bekannt ist;
- jeder Positionssensor (41) von wenigstens einer passiven optischen Sonde gebildet wird, die in einer Ebene lotrecht zur optischen Referenzebene angeordnet ist, um den optischen Strahl abzufangen und ein Lichtsignal bereitzustellen, dessen Intensität permanent in Abhängigkeit von der Position der Abfangzone auf dem Sensor variiert.

**2.** Gerät nach Anspruch 1, **dadurch gekennzeichnet, dass** Anzahl und Anordnung der Sensoren (13, 41) auf der Oberfläche (17) von verschiedenen Verformungsmodi abhängig sind, für die die Auswirkungen auf die Ebenheit der Oberfläche gemessen werden sollen.

**3.** Gerät nach Anspruch 1 oder 2, **dadurch gekennzeichnet, dass** jeder Positionssensor (41) von zwei passiven optischen Sonden (44) gebildet wird, die in einer Ebene lotrecht zur optischen Referenzebene angeordnet ist, um den optischen Strahl abzufangen und ein Lichtsignal bereitzustellen, dessen Intensität von der Position der Abfanzone auf dem Sensor abhängig ist, wobei die zwei Sonden (44) in Bezug zueinander so angeordnet sind, dass für eine Variation der gegebenen Abfangposition die Intensitäten der von jeder der Sonden zugeführten Lichtsignale auf entgegengesetzte Weise variieren.

**4.** Gerät nach einem der Ansprüche 1 bis 3, **dadurch gekennzeichnet, dass**:

- die Mittel (311, 31, 32) zum Bilden einer optischen Referenzebene eine Laserquelle (31) umfassen, die eine intensitätsmodulierte Lichtquelle ausstrahlen;
- die Signalverarbeitungsmittel (312) zum Durchführen einer synchronen Demodulation der von jedem Sensor abgefangenen Lichtwelle ausgelegt sind.

**5.** Gerät nach Anspruch 3 oder 4, **dadurch gekennzeichnet, dass** es ferner Detektorgeräte umfasst, wobei die von jedem der Sensoren (41) erzeugten optischen Signale über Lichtleitfasern (48, 49) zu einem gegebenen Detektor gesendet werden.

6. Gerät nach Anspruch 5, **dadurch gekennzeichnet, dass** jeder zwei Lichtsignale erzeugende Sensor (41) von zwei Fotodioden (42, 43) gebildet wird, wobei jede Fotodiode mit einer Lichtleitfaser (48, 49) verbunden ist, die eines der von dem Sensor produzierten Signale führt.

7. Verfahren zum Kompensieren der Auswirkungen von Ebenheitsvariationen einer aktiven Antenne auf Form und Richtung ihres Strahlungsdiagramms, **dadurch gekennzeichnet, dass** das Gerät nach einem der vorherigen Ansprüche implementiert wird, und dadurch, dass das Ergebnis der von jedem Sensor durchgeführten Positionsmessung zum Ermitteln der Verformung des Sendediagramms und der Amplituden- und Phasenkorrektur benutzt wird, die auf jede der Quellen anzuwenden ist, um die Verformung zu kompensieren.

**Claims**

1. An optical device for the real-time measurement of the deformations experienced by a flat surface (17) mounted on a deformable structure, said device comprising means (11) for forming an optical reference plane (12) and optical position sensors (13, 41) distributed over said surface (17), each sensor being arranged so as to measure the variation in position, relative to said formed optical plane (12), of the point of the surface on which it is positioned, said optical position sensors (41) being linear optical sensors, transparent to radio waves, configured to intercept the optical beam materializing said reference plane and to produce an optical signal as a function of the zone of the sensor that has intercepted said optical beam, said signal being transmitted to remote processing means (39) by means of at least one optical fibre (48, 49);
**characterised in that**:

   - said means for forming an optical reference plane comprise an optical laser source (31) provided with a collimation lens illuminating a conical mirror (32) disposed on the surface to be measured at a reference point, said source and said conical mirror being arranged so as to create an optical reference plane (12), the orientation of which relative to the plane of the antenna is known;
   - each position sensor (41) is constituted by at least one passive optical probe disposed in a plane perpendicular to said optical reference plane so as to intercept said optical beam and to provide a light signal, the intensity of which permanently varies as a function of the position of the interception zone on the sensor.

2. The device according to claim 1, **characterised in that** the number and the arrangement of said sensors (13, 41) on said surface (17) is a function of various deformation modes for which the effects on the flatness of the surface are to be measured.

3. The device according to claim 1 or 2, **characterised in that** each position sensor (41) is constituted by two passive optical probes (44) disposed in a plane perpendicular to said optical reference plane so as to intercept said optical beam and to provide a light signal, the intensity of which is a function of the position of the interception zone on the sensor, the two probes (44) being arranged relative to each other so that, for a variation of the given interception position, the intensities of the light signals supplied by each of the probes varies in an opposing manner.

4. The device according to any one of claims 1 to 3, **characterised in that**:

   - the means (311, 31, 32) for forming an optical reference plane comprise a laser source (31) emitting an intensity-modulated light wave;
   - the signal processing means (312) are designed to carry out a synchronous demodulation of the light wave intercepted by each sensor.

5. The device according to claim 3 or 4, **characterised in that** it further comprises detector devices, the optical signals produced by each of said sensors (41) being transmitted via optical fibre (48, 49) to a given detector.

6. The device according to claim 5, **characterised in that** each sensor (41) producing two light signals is constituted by two photodiodes (42, 43), each photodiode being connected to an optical fibre (48, 49) carrying one of the signals produced by said sensor.

7. A method for compensating for the effects of variations in flatness on an active antenna on the shape and the direction of its radiation pattern, **characterised in that** the device according to any one of the preceding claims is implemented and **in that** the result of the position measurement carried out by each sensor is used to determine the deformation of the transmission pattern and the amplitude and phase correction to be applied to each of the sources in order to compensate for the deformation.

**Fig. 1**

**Fig. 2**

Fig. 4

Fig. 3

EP 2 208 016 B1

Fig. 5

Fig. 6

Fig. 9

Fig. 10

Fig. 8

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2818812

- FR 2151018